# EUROPÄISCHE PATENTANMELDUNG

(11) **EP 2 436 735 A1**
(43) Veröffentlichungstag der Anmeldung: **04.04.2012**
(21) Anmeldenummer: 10184328.2
(22) Anmeldetag: 30.09.2010
(51) Int. Cl.: C08L 83/04, C08L 83/06, C09D 183/04, C09D 183/06, C09J 183/04, C09J 183/06

(54) **Zweikomponentige Siliconzusammensetzung**

(71) Anmelder: Sika Technology AG, 6340 Baar (CH)
(72) Erfinder: Büttner, Matthias, 97340 Marktbreit (DE); Djurdjevic, Alexander, 8048 Zürich (CH)
(74) Vertreter: Sika Patent Attorneys

(57) **Zusammenfassung**

Gegenstand der vorliegenden Erfindung ist eine zweikomponentige Siliconzusammensetzung bestehend aus einer Komponente **A** umfassend mindestens ein Polydiorganosiloxan **P** und einer Komponente **B ,** wobei eine der beiden Komponenten **A** oder **B** zusätzlich mindestens eine hydrophobe Kieselsäure enthält und die andere der beiden Komponenten zusätzlich mindestens ein Additiv, ausgewählt aus der Gruppe bestehend aus Polyamin, Polyether, Heteropolyether und Polyetheramin enthält.

Mit der Applikation oder unmittelbar nach der Applikation einer erfindungsgemässen Zusammensetzung geht ein Anstieg der Viskosität einher, sodass die Zusammensetzung eine verbesserte Anfangsfestigkeit und ein geringeres Abrutschverhalten aufzeigt.

## Beschreibung

### Technisches Gebiet

Die vorliegende Erfindung betrifft das Gebiet der zweikomponentigen Siliconzusammensetzungen.

### Stand der Technik

Siliconzusammensetzungen sind seit längerem bekannt und werden insbesondere als Kleb- und Dichtstoffe in unterschiedlichen Anwendungen eingesetzt. Weit verbreitet sind dabei neben einkomponentigen, feuchtigkeitshärtenden Siliconzusammensetzungen, auch bekannt als RTV-1 Silicone (RTV-1: "room temperature vulcanizing, 1-part silicones"), auch bei Raumtemperatur vernetzende, zweikomponentige Siliconzusammensetzungen, auch bekannt als RTV-2 Silicone (RTV-2: "room temperature vulcanizing, 2-part silicones").

Sehr oft besteht bei Kleb- und Dichtstoffen die Anforderung, dass sie unmittelbar nach der Applikation eine gute Standfestigkeit und, insbesondere bei Verklebungen im vertikalen Bereich, ein möglichst geringes Abrutschverhalten aufweisen. Dieser Anforderung wird mit höheren Viskositäten derartiger Zusammensetzungen Rechnung getragen. Ein Nachteil dieser Vorgehensweise liegt darin, dass die Applikation der Zusammensetzungen durch die erhöhte Viskosität erschwert wird. Dies gilt sowohl für die manuelle als auch für die automatische Applikation, wobei sich höherviskose Zusammensetzungen insbesondere nur erschwert durch Applikationsgeräte befördern lassen.

### Darstellung der Erfindung

Aufgabe der vorliegenden Erfindung ist es daher, eine zweikomponentige Siliconzusammensetzung bereitzustellen, welche sich leicht befördern lässt und bei welcher mit der Applikation oder unmittelbar nach der Applikation ein Anstieg der Viskosität einhergeht, sodass die Zusammensetzung eine verbesserte Anfangsfestigkeit und ein geringeres Abrutschverhalten aufzeigt.

Diese Aufgabe wird gelöst durch eine zweikomponentige Siliconzusammensetzung gemäss den Merkmalen des Anspruchs 1.

Überraschenderweise wurde gefunden, dass sich die Viskosität von zweikomponentigen Siliconzusammensetzungen in-situ, also während der Applikation der Zusammensetzung durch Mischen ihrer beiden Komponenten, mit Hilfe eines Systems bestehend aus einer hydrophoben Kieselsäure, welche in einer der beiden Komponenten eingesetzt wird, und einem spezifischen Additiv, welches in der anderen Komponente enthalten ist, erhöhen lässt.

Die vorliegende Erfindung weist den Vorteil auf, dass das eingesetzte System keine unerwünschte Veränderung der Siliconzusammensetzung in ihren Eigenschaften wie Haftung und Mechanik herbeiführt. Ein weiterer Vorteil ist, dass sich der Viskositätsanstieg gemäss der vorliegenden Erfindung in einem breiten Bereich einstellen lässt.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine zweikomponentige Siliconzusammensetzung bestehend aus einer Komponente **A** umfassend
- mindestens ein Polydiorganosiloxan **P** der Formel (I), 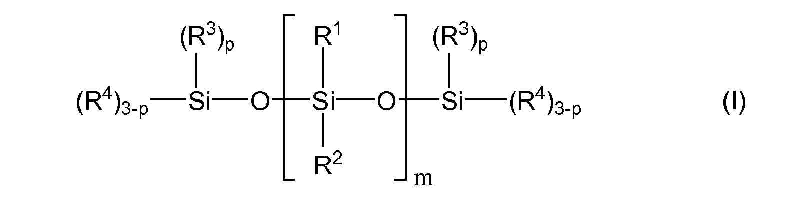 wobei
die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
die Reste R⁴ unabhängig voneinander für Hydroxylgruppen oder für Alkoxy-, Acetoxy- oder Ketoximgruppen mit jeweils 1 bis 13 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
der Index p für einen Wert von 0, 1 oder 2 steht; und
der Index m so gewählt ist, dass das Polydiorganosiloxan **P** bei einer Temperatur von 23 °C eine Viskosität von 10 bis 500'000 mPa·s aufweist;
und einer Komponente **B** umfassend entweder
- mindestens einen Vernetzer für Polydiorganosiloxane; sowie
- mindestens einen Katalysator für die Vernetzung von Polydiorganosiloxanen; falls p für einen Wert von 2 steht und die Reste R⁴ für Hydroxylgruppen stehen;
oder

Wasser, falls die Reste R⁴ für Alkoxy-, Acetoxy- oder Ketoximgruppen stehen;
wobei eine der beiden Komponenten **A** oder **B** zusätzlich mindestens eine hydrophobe Kieselsäure enthält und die andere der beiden Komponenten zusätzlich mindestens ein Additiv, ausgewählt aus der Gruppe bestehend aus Polyamin, Polyether, Heteropolyether und Polyetheramin, enthält.

Mit "Poly" beginnende Substanznamen wie beispielsweise Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Unter "Heteropolyether" versteht man im vorliegenden Dokument Polymere mit einer Polyether-analogen Struktur und Heteroatomen, wie S, anstelle der Ether-Sauerstoffatome.

Unter "Molekulargewicht" versteht man im vorliegenden Dokument das Molekulargewichtsmittel Mₙ (Zahlenmittel).

Unter "Raumtemperatur" wird eine Temperatur von 23°C verstanden.

Beim Polydiorganosiloxan **P** der Formel (I), welches in der Komponente **A** enthalten ist, stehen die Reste R¹ und R² vorzugsweise für Alkylreste mit 1 bis 5, insbesondere mit 1 bis 3, C-Atomen, bevorzugt für Methylgruppen.

Weiterhin ist der Index m insbesondere so gewählt, dass das Polydiorganosiloxan **P** bei einer Temperatur von 23°C eine Viskosität von 6'000 bis 100'000 mPa·s, insbesondere von 10'000 bis 60'000 mPa·s, aufweist. Die Viskosität wird typischerweise bestimmt nach DIN 53018.

Handelt es sich beim Polydiorganosiloxan **P** in der Komponente **A der** zweikomponentigen Siliconzusammensetzung um ein Hydroxylgruppen terminiertes Polydiorganosiloxan, steht der Index p für einen Wert von 2. Bei dieser Ausführungsform umfasst die Komponente **B** zusätzlich mindestens einen Vernetzer für Polydiorganosiloxane sowie mindestens einen Katalysator für die Vernetzung von Polydiorganosiloxanen.

Hydroxylgruppen terminierte Polydiorganosiloxane sind bekannt und kommerziell erhältlich. Auch die Herstellung derartiger Polydiorganosiloxane erfolgt in bekannter Art. Beispielsweise ist sie beschrieben in US 4,962,152, deren Offenbarung hiermit durch Bezugnahme eingeschlossen ist.

Handelt es sich beim Polydiorganosiloxan **P** in der Komponente **A** der zweikomponentigen Siliconzusammensetzung, um ein Polydiorganosiloxan **P** der Formel (I), bei welchem die Reste R⁴ für Alkoxy-, Acetoxy- oder Ketoximgruppen stehen, umfasst die Komponente **B** zusätzlich Wasser.

In dieser Ausführungsform stehen die Reste R⁴ vorzugsweise für Alkoxy- oder Ketoximgruppen. Der Index p steht insbesondere für einen Wert von 0 oder 1.

Bevorzugte Alkoxygruppen sind Methoxy-, Ethoxy- oder Isopropoxygruppen.

Bevorzugte Ketoximgruppen sind Dialkylketoximgruppen deren Alkylgruppen jeweils 1 bis 6 C-Atome aufweisen. Vorzugsweise stehen die beiden Alkylgruppen der Dialkylketoximgruppen unabhängig von einander für Methyl-, Ethyl-, n-Propyl-, iso-Propyl-, n-Butyl- oder iso-Butylgruppen. Besonders bevorzugt sind diejenigen Fälle, in denen eine Alkylgruppe des Dialkylketoxims für eine Methylgruppe steht und die andere Alkylgruppe des Dialkylketoxims für eine Methyl-, Ethyl- oder für eine iso-Butylgruppe steht. Meist bevorzugt steht die Ketoximgruppe für eine Ethyl-methylketoximgruppe.

Die Komponente **A** der zweikomponentigen Siliconzusammensetzung umfasst mindestens ein Polydiorganosiloxan **P** der Formel (I), wobei es sich dabei insbesondere um ein Hydroxylgruppen terminiertes Polydiorganosiloxan handelt. Vorzugsweise stehen die Reste R¹, R² und R³ für Alkylreste mit 1 bis 3, C-Atomen, bevorzugt für Methylgruppen. Ist das Polydiorganosiloxan P ein Hydroxylgruppen terminiertes Polydiorganosiloxan, weist der Index p einen Wert von 2 auf.

Umfasst die zweikomponentige Siliconzusammensetzung in der Komponente **B** zusätzlich einen Vernetzer für Polydiorganosiloxane, handelt es sich dabei insbesondere um ein Silan der Formel (II).

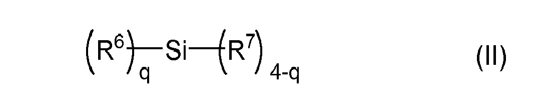

Dabei steht der Rest R⁶ unabhängig voneinander für einen Rest, wie er vorhergehend als R³ beschreiben worden ist. Selbstverständlich ist R⁶ dabei unabhängig von der Bedeutung von R³ im Polydiorganosiloxan **P.**

Der Rest R⁷ steht unabhängig voneinander für einen Rest, wie er vorhergehend als R⁴ beschreiben worden ist. Selbstverständlich ist R⁷ dabei unabhängig von der Bedeutung von R⁴ im Polydiorganosiloxan **P.** Vorzugsweise stehen die Reste R⁷ für Alkoxy- oder Ketoximgruppen, wie sie vorhergehend beschrieben worden sind.

Weiterhin steht der Index q für einen Wert von 0 bis 4, mit der Massgabe, dass falls q für einen Wert von 3 oder 4 steht, mindestens q-2 Reste R⁶ jeweils mindestens eine mit den Hydroxyl-, Alkoxy-, Acetoxy- oder Ketoximgruppen des Polydiorganosiloxans **P** reaktive Gruppe aufweisen. Insbesondere steht q für einen Wert von 0, 1 oder 2, bevorzugt für einen Wert von 0 oder 1.

Beispiele geeigneter Silane der Formel (II) sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan, Tetra-n-butoxysilan, Methyltris(methyl-ethylketoximo)silan, Phenyltris(methyl-ethylketoximo)silan, Vinyltris(methyl-ethylketoximo)silan, Methyltris(isobutylketoximo)silan oder Tetra(methyl-ethylketoximo)silan. Besonders bevorzugt sind Methyltrimethoxysilan, Vinyltrimethoxysilan, Tetraethoxysilan, Methyltris(methyl-ethylketoximo)silan, Vinyltris(methylethylketoximo)silan und Methyltris(isobutylketoximo)silan. Bevorzugte Ketoximosilane sind vielfach kommerziell erhältlich, zum Beispiel von ABCR GmbH & Co, Deutschland, oder von Nitrochemie AG, Deutschland.

Weiterhin können die Silane auch bereits teilweise (ein Teil aller R⁷ = OH) oder vollständig hydrolysiert (alle R⁷ = OH) vorliegen. Aufgrund der stark erhöhten Reaktivität von teilweise oder vollständig hydrolysierten Silanen kann ihr Einsatz als Vernetzer vorteilhaft sein. Dem Fachmann ist dabei bekannt, dass es beim Einsatz von teilweise oder vollständig hydrolysierten Silanen zur Bildung von oligomeren Siloxanen, insbesondere zu Dimeren und/oder Trimeren, kommen kann, welche durch Kondensation von hydrolysierten Silanen gebildet werden. Demnach können als Vernetzer für die zweikomponentige Siliconzusammensetzung auch oligomere Siloxane eingesetzt werden.

Beispielsweise sind geeignete oligomere Siloxane Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan.

Selbstverständlich können als Vernetzer für Polydiorganosiloxane auch beliebige Mischungen der vorhergehend genannten Silane eingesetzt werden.

Der Anteil des Vernetzers für Polydiorganosiloxane beträgt vorzugsweise 0.1 bis 15 Gew.-%, insbesondere 1 bis 10 Gew.-%, bevorzugt 2 bis 6 Gew.-%, der gesamten zweikomponentigen Siliconzusammensetzung.

Umfasst die zweikomponentige Siliconzusammensetzung in der Komponente **B** zusätzlich einen Katalysator für die Vernetzung von Polydiorganosiloxanen handelt es sich insbesondere um eine zinnorganische Verbindung oder um ein Titanat oder um eine Kombination davon.

Bevorzugte zinnorganische Verbindungen sind Dialkylzinnverbindungen wie sie beispielsweise ausgewählt sind aus der Gruppe bestehend aus Dimethylzinndi-2-ethylhexanoat, Dimethylzinndilaurat, Di-n-butylzinndiacetat, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Di-n-butylzinndimaleinat, Di-n-butylzinndioleat, Di-n-butylzinndiacetat, Di-n-octylzinndi-2-ethylhexanoat, Di-n-octylzinndi-2,2-dimethyloctanoat, Di-n-octylzinndimaleinat und Di-n-octylzinndilaurat.

Als Titanate bzw. Organotitanate werden Verbindungen bezeichnet, welche mindestens einen über ein Sauerstoffatom an das Titanatom gebundenen Liganden aufweisen. Als über eine Sauerstoff-Titan-Bindung an das Titanatom gebundene Liganden eignen sich dabei diejenigen, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe. Bevorzugte Titanate sind beispielsweise Tetrabutyl-oder Tetraisopropyltitanat.

Weiterhin geeignete Titanate weisen mindestens einen mehrzähnigen Liganden, auch Chelatligand genannt, auf. Insbesondere ist der mehrzähnige Ligand ein zweizähniger Ligand.

Geeignete Titanate sind beispielsweise unter den Handelsnamen Tyzor^{®} AA, GBA, GBO, AA-75, AA-65, AA-105, DC, BEAT, IBAY kommerziell erhältlich von der Firma DuPont, USA.

Selbstverständlich ist es möglich oder in gewissen Fällen sogar bevorzugt, Mischungen verschiedener Katalysatoren einzusetzen. Beispielsweise ist der Katalysator eine Mischung einer zinnorganischen Verbindung mit einem Titanat.

Der Anteil des Katalysators für die Vernetzung von Polydiorganosiloxanen beträgt vorzugsweise 0.001 bis 10 Gew.-%, insbesondere 0.005 bis 4 Gew.-%, bevorzugt 0.01 bis 3 Gew.-%, der gesamten zweikomponentigen Siliconzusammensetzung.

Bei der hydrophoben Kieselsäure handelt es sich insbesondere um eine hydrophobe, pyrogene Kieselsäure. Typischerweise weisen geeignete hydrophobe Kieselsäuren eine BET-Oberfläche im Bereich von 100 bis 300 m²/g auf. Die BET-Oberfläche wird beispielsweise bestimmt nach EN ISO 18757.

Geeignete hydrophobe Kieselsäuren lassen sich beispielsweise durch Hydrophobierung von hydrophilen Kieselsäuren mit Organosilanen oder Organosiloxanen herstellen. Die Oberfläche der hydrophilen Kieselsäure wird dabei chemisch modifiziert, d.h., dass das Hydrophobierungsmittel durch chemische Bindungen mit der Kieselsäure verbunden ist.

Geeignete Hydrophobierungsmittel sind beispielsweise Octamethylcyclotetrasiloxan, Polydimethylsiloxan, Dimethyldichlorsilan oder Hexamethyldisilazan.

Geeignete hydrophobe Kieselsäuren sind beispielsweise kommerziell erhältlich von Evonik Degussa GmbH, Deutschland, von Cabot Corporation, USA oder von Wacker Chemie AG, Deutschland.

Die zweikomponentige Siliconzusammensetzung umfasst mindestens ein Additiv, ausgewählt aus der Gruppe bestehend aus Polyamin, Polyether, Heteropolyether und Polyetheramin. Als Additiv eignen sich auch Derivate der genannten Verbindungen.

Insbesondere weist das Additiv zusätzlich mindestens eine funktionelle Gruppe der Formel -XH auf, wobei X für O, S oder NR⁵ steht und R⁵ für ein Wasserstoffatom oder für einen linearen oder verzweigten, einwertigen Kohlenwasserstoffrest mit 1 bis 20 C-Atomen steht.

Weiterhin weisen geeignete Additive insbesondere ein Molekulargewicht im Bereich von 100 bis 10'000 g/mol auf.

Vorzugsweise ist das Additiv ein Polyamin oder Polyetheramin.

Geeignete Polyamine sind insbesondere Polyalkylenimin, wie Polyethylenimin oder Polypropylenimin, oder alkoxyliertes Polyamin, wie ethoxyliertes und/oder propoxyliertes Ethylendiamin.

Geeignete Polyetheramine sind Polyoxyethylenamin, Polyoxypropylenamin oder Polyoxyethylen-polyoxypropylenamin. Als Polyetheramine besonders bevorzugt sind Polyethermonoamine, Polyetherdiamine oder Polyethertriamine. Bei den Aminogruppen kann es sich dabei um primäre, sekundäre oder tertiäre Aminogruppen handeln. Insbesondere handelt es sich bei den Aminogruppen um primäre oder sekundäre Aminogruppen.

Geeignete Polyetheramine sind beispielsweise unter dem Handelsnamen Jeffamine^{®} kommerziell erhältlich von Huntsman Corporation, USA. Besonders geeignet sind Jeffamine^{®} der Serien M, D, ED, DER, T, SD oder ST.

Der Anteil des Additivs beträgt vorzugsweise 0.05 bis 5 Gew.-%, insbesondere 0.1 bis 3 Gew.-%, bevorzugt 0.2 bis 1.5 Gew.-%, bezogen auf die gesamte zweikomponentige Siliconzusammensetzung.

In einer bevorzugten Ausführungsform der zweikomponentigen Siliconzusammensetzung ist die hydrophobe Kieselsäure in der Komponente **A** und das Additiv in der Komponente **B** enthalten.

Der Vorteil dieser Ausführungsform liegt insbesondere darin, dass die Komponente **A** gegenüber der Komponente **B** üblicherweise in einer grösseren Menge eingesetzt wird und dass die Viskosität der Komponente **A** somit durch die Zugabe der hydrophoben Kieselsäure in einem geringeren Ausmass beeinflusst wird, als dies bei der Komponente **B** der Fall wäre.

Es hat sich gezeigt, dass das beschriebene Additiv zusammen mit einer hydrophoben Kieselsäure einen signifikanten Effekt auf die Viskosität der Siliconzusammensetzung aufweist. In jeweils einer der beiden Komponenten **A** und **B** der zweikomponentigen Siliconzusammensetzung eingesetzt, führen die hydrophobe Kieselsäure und das Additiv unmittelbar nach dem Vermischen der beiden Komponenten zu einem deutlichen Anstieg der Viskosität.

Typischerweise weist die Komponente **A** bei erfindungsgemässen zweikomponentigen Siliconzusammensetzungen, eine Viskosität im Bereich von 500 bis 5000 Pa.s, insbesondere 500 bis 3000 Pa.s, auf. Die Komponente **B** weist typischerweise eine Viskosität im Bereich von 1 bis 1500 Pa.s, insbesondere von 10 bis 700 Pa.s auf. Die Einstellung dieser Viskositätsbereiche erfolgt in der Regel durch Verdickungsmittel und/oder Füllstoffe, welche typischerweise in den beiden Komponenten enthalten sind. Die Viskosität der Komponente **A** ist weiterhin beeinflusst durch die Viskosität des eingesetzten Polydiorganosiloxans **P.** Zum Einstellen der Viskosität enthalten sowohl die Komponente **A** als auch die Komponente **B** vorzugsweise jeweils zusätzlich mindestens einen Füllstoff.

Der Viskositätsanstieg, welcher durch das Additiv zusammen mit einer hydrophoben Kieselsäure beim Mischen der beiden Komponenten **A** und **B** der zweikomponentigen Siliconzusammensetzung herbeigeführt wird, zeichnet sich insbesondere dadurch aus, dass die Viskosität der zweikomponentigen Siliconzusammensetzung unmittelbar nach dem Mischen der beiden Komponenten **A** und **B** um ≥ 100% gegenüber der Ausgangsviskosität der höherviskosen Komponente, typischerweise der Komponente **A,** ansteigt.

Ein bedeutender Vorteil der vorliegenden Erfindung liegt darin, dass einerseits durch die Wahl des Additivs und der hydrophoben Kieselsäure, andererseits durch ihren jeweiligen Anteil in der entsprechenden Komponente, der Viskositätsanstieg der zweikomponentigen Siliconzusammensetzung, welcher unmittelbar nach dem Mischen der Komponenten **A** und **B** auftritt, in einem sehr breiten Bereich eingestellt werden kann. So sind Viskositätsanstiege gegenüber der Ausgangsviskosität der höherviskosen Komponente, typischerweise der Komponente **A,** von bis zu 1000% und mehr einstellbar.

Wie bereits beschrieben weist die zweikomponentige Siliconzusammensetzung vorzugsweise zusätzlich mindestens einen Füllstoff auf, welcher sowohl die rheologischen Eigenschaften der nicht ausgehärteten Zusammensetzung als auch die mechanischen Eigenschaften und die Oberflächenbeschaffenheit der ausgehärteten Zusammensetzung beeinflusst. Insbesondere ist der Füllstoff in der Komponente **A** enthalten.

Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, calcinierte Kaoline, Aluminiumoxide, Aluminiumhydroxide, Kieselsäuren, insbesondere hochdisperse Kieselsäuren aus Pyrolyseprozessen, Russ, insbesondere industriell hergestellter Russ ("carbon black"), Aluminiumsilicate, Magnesium-Aluminiumsilicate, Zirkoniumsilicate, Quarzmehl, Christobalitmehl, Diatomeenerde, Glimmer, Eisenoxide, Titanoxide, Zirconiumoxide, Gips, Annalin, Bariumsulfat, Borcarbid, Bornitrid, Graphit, Kohlefasern, Glasfasern oder Glashohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.

Weiterhin können als Füllstoffe auch so genannte Verdickungsmittel eingesetzt werden, insbesondere wasserlösliche bzw. wasserquellbare Polymere oder anorganische Verdickungsmittel. Beispiele für organische natürliche Verdickungsmittel sind Agar-agar, Carrageen, Tragant, Gummi arabicum, Alginate, Pektine, Polyosen, Guar-Mehl, Stärke, Dextrine, Gelatine oder Casein. Beispiele für organische voll- oder teilsynthetische Verdickungsmittel sind Carboxymethylcellulose, Celluloseether, Hydroxyethylcellulose, Hydroxypropylcellulose, Poly(meth)acrylsäurederivate, Poly(meth)-acrylate, Polyvinylether, Polyvinylalkohol oder Polyamide.

Beschriebene Verdickungsmittel werden insbesondere in der Komponente **B** eingesetzt, wenn diese zusammen mit einer Komponente **A** umfassend ein Polydiorganosiloxan **P,** wobei die Reste R⁴ für Alkoxy-, Acetoxy- oder Ketoximgruppen stehen, verwendet wird, d.h., wenn die Komponente **B** Wasser enthält.

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, insbesondere 15 bis 60 Gew.-%, bevorzugt 30 bis 60 Gew.-%, bezogen auf die gesamte zweikomponentige Siliconzusammensetzung.

Die zweikomponentige Siliconzusammensetzung kann gegebenenfalls noch weitere Bestandteile enthalten.

Derartige zusätzliche Bestandteile sind insbesondere Weichmacher, Härtungsbeschleuniger, Pigmente, Haftvermittler, Verarbeitungshilfsmittel, Rheologiemodifikatoren, Stabilisatoren, Farbstoffe, Inhibitoren, Hitzestabilisatoren, Antistatika, Flammschutzmittel, Biozide, Wachse, Verlaufsmittel, Thixotropierungsmittel und weitere dem Fachmann bekannte gängige Rohstoffe und Additive.

Geeignete weitere Bestandteile, insbesondere Haftvermittler und Weichmacher, welche in der zweikomponentigen Siliconzusammensetzung enthalten sein können, sind beispielsweise beschrieben in den Absätzen [0051] bis [0055] der Patentanmeldung US 2010/063190 A1, deren gesamte Offenbarung hiermit durch Bezugnahme eingeschlossen ist.

Beim Einsatz von derartigen optionalen Bestandteilen ist es wichtig darauf zu achten, dass Bestandteile, welche durch Reaktion untereinander oder mit anderen Inhaltsstoffen die Lagerstabilität der Zusammensetzung beeinträchtigen könnten, getrennt voneinander, aufbewahrt werden.

Weiterhin ist es vorteilhaft, alle genannten, in der zweikomponentigen Siliconzusammensetzung gegebenenfalls vorhandenen, Bestandteile so auszuwählen, dass die Lagerstabilität der beiden Komponenten der zweikomponentigen Siliconzusammensetzung durch die Anwesenheit eines solchen Bestandteils nicht negativ beeinflusst wird, d.h., dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen zweikomponentigen Siliconzusammensetzung führende Reaktionen während der Lagerung nicht in signifikantem Ausmass auftreten. In manchen Fällen kann es sinnvoll sein, gewisse Bestandteile vor dem Einmischen in die Zusammensetzung chemisch oder physikalisch zu trocknen.

Weiterhin betrifft die vorliegende Erfindung die Verwendung einer zweikomponentigen Siliconzusammensetzung, wie sie vorhergehend beschrieben wurde, als Klebstoff, Dichtstoff, Beschichtung oder als Gussmasse.

Insbesondere eignet sich die erfindungsgemässe zweikomponentige Siliconzusammensetzung zum Verkleben, Abdichten oder Beschichten von Substraten, welche ausgewählt sind aus der Gruppe bestehend aus Beton, Mörtel, Backstein, Ziegel, Keramik, Gips, Naturstein wie Granit oder Marmor, Glas, Glaskeramik, Metall oder Metalllegierung wie Aluminium, Stahl, Buntmetall, verzinktes Metall, Holz, Kunststoff wie PVC, Polycarbonat, Polymethyl-(meth)acrylat, Polyester, Epoxidharz, Farbe und Lack.

Typischerweise eignet sich die erfindungsgemässe zweikomponentige Siliconzusammensetzung als Kleb- oder Dichtstoff, insbesondere für Anwendungen, welche eine Zusammensetzung mit einer guten Anfangsfestigkeit und einem geringen Abrutschverhalten erfordern. Insbesondere eignen sich erfindungsgemässe zweikomponentige Siliconzusammensetzungen für den Fenster- oder Fassadenbau sowie für die Verklebung und Abdichtung von Solarpaneelen. Weiterhin eignet sich die erfindungsgemässe zweikomponentige Siliconzusammensetzung für die Verwendung im Fahrzeugbau.

Sowohl Komponente **A** als auch Komponente **B** der vorhergehend beschriebenen zweikomponentigen Siliconzusammensetzung werden insbesondere unter Ausschluss von Feuchtigkeit hergestellt und aufbewahrt. Getrennt voneinander sind die beiden Komponenten lagerstabil, das heisst, sie können in einer geeigneten Verpackung oder Anordnung über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändern. Üblicherweise wird die Lagerstabilität über die Messung der Viskosität oder der Reaktivität über die Zeit ermittelt.

Bei der Applikation der zweikomponentigen Siliconzusammensetzung werden die Komponenten **A** und **B,** beispielsweise durch Rühren, Kneten, Walzen oder dergleichen, insbesondere jedoch über einen Statikmischer, miteinander vermischt. Dabei kommen die Hydroxylgruppen oder die hydrolysierbaren Gruppen des Polydiorganosiloxans **P** in Kontakt mit den hydrolysierbaren oder gegebenenfalls mit bereits hydrolysierten Gruppen des Vernetzers, wodurch es zur Aushärtung der Zusammensetzung durch Kondensationsreaktionen kommt. Der Kontakt der Siliconzusammensetzung mit Wasser, insbesondere in Form von Luftfeuchtigkeit, bei der Applikation kann die Vernetzung ebenfalls begünstigen, da durch Reaktion des Wassers mit hydrolysierbaren Gruppen höherreaktive Silanolgruppen gebildet werden. Die Aushärtung der zweikomponentigen Siliconzusammensetzung erfolgt insbesondere bei Raumtemperatur.

Bei der Vernetzung der zweikomponentigen Siliconzusammensetzung entstehen als Nebenprodukte der Kondensationsreaktion insbesondere Verbindungen, welche weder die Zusammensetzung noch das Substrat, auf dem die Zusammensetzung appliziert wird, beeinträchtigen. Meist bevorzugt handelt es sich bei den Nebenprodukten um Verbindungen, welche sich leicht aus der vernetzenden oder der bereits vernetzten Zusammensetzung verflüchtigen.

Insbesondere wird die erfindungsgemässe zweikomponentige Siliconzusammensetzung so eingesetzt, dass das Gewichtsverhältnis der Komponente **A** zu Komponente **B** ≥ 1:1, insbesondere von 3:1 bis 15:1, bevorzugt von 10:1 bis 13:1, beträgt.

Die vorliegende Erfindung betrifft weiterhin eine gehärtete Siliconzusammensetzung wie sie erhältlich ist aus einer vorhergehend beschriebenen zweikomponentigen Siliconzusammensetzung durch Mischen der Komponente **A** mit der Komponente **B.**

Weiterhin betrifft die vorliegende Erfindung die Verwendung einer hydrophoben Kieselsäure zusammen mit einem Additiv, ausgewählt aus der Gruppe bestehend aus Polyamin, Polyether, Heteropolyether und Polyetheramin, zur Erhöhung der Viskosität von zweikomponentigen Siliconzusammensetzungen, wobei die hydrophobe Kieselsäure und das Additiv je in einer der beiden separaten Komponenten der zweikomponentigen Siliconzusammensetzungen enthalten sind und beim Zusammenführen der beiden Komponenten zu einem Viskositätsanstieg von mindestens 100% gegenüber der Ausgangsviskosität der höherviskosen Komponente der zweikomponentigen Siliconzusammensetzung führen.

Weiterhin betrifft die vorliegende Erfindung ein Verfahren zur Erhöhung der Viskosität bei der Applikation von zweikomponentigen Siliconzusammensetzungen bestehend aus einer Komponente **A** umfassend
- mindestens ein Polydiorganosiloxan **P,** wie es vorhergehend beschrieben worden ist;
und einer Komponente **B** umfassend entweder
- mindestens einen Vernetzer für Polydiorganosiloxane; sowie
- mindestens einen Katalysator für die Vernetzung von Polydiorganosiloxanen; falls p für einen Wert von 2 steht und die Reste R⁴ für Hydroxylgruppen stehen;
   oder
- Wasser, falls die Reste R⁴ für Alkoxy-, Acetoxy- oder Ketoximgruppen stehen;
wobei einer der beiden Komponenten **A** oder **B** vor der Applikation mindestens eine hydrophobe Kieselsäure und der anderen der beiden Komponenten vor der Applikation mindestens ein Additiv, ausgewählt aus der Gruppe bestehend aus Polyamin, Polyether, Heteropolyether und Polyetheramin, zugegeben werden.

Bevorzugt wird die hydrophobe Kieselsäure der Komponente **A** und das Additiv der Komponente **B** zugegeben.

Der Viskositätsanstieg setzt unmittelbar nach dem Vermischen der beiden Komponenten **A** und **B** ein.

Gegenüber dem Viskositätsanstieg, welcher mit der Vernetzung der zweikomponentigen Siliconzusammensetzung einhergeht, wirkt sich der durch das Zusammenführen der hydrophoben Kieselsäure mit dem Additiv hervorgerufene Viskositätsanstieg nicht auf die Verarbeitbarkeit der Zusammensetzung aus, d.h., die Zusammensetzung bleibt auch während und nach dem Viskositätsanstieg formbar, also beispielsweise verstreichbar.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testmethoden

Die Messung der **Viskosität** erfolgte in Anlehnung an DIN 53018 mittels Kegel-Platte-Viskosimeter Physica MCR101 der Firma Anton Paar, Österreich, Kegel-Typ CP 25-1, Temperatur 25°C, Scherrate 0.5 s⁻¹.

### Herstellung der Komponente A1

45 Gew.-% α,ω-Dihydroxypolydimethylsiloxan mit einer Viskosität nach DIN 53018 von 50 Pa.s bei 23°C, 15 Gew.-% Methyl terminiertes Polydimethylsiloxan mit einer Viskosität nach DIN 53018 von 0.1 Pa.s bei 23°C, 30 Gew.-% gemahlene Kreide (Carbital™ 110 von Imerys, Frankreich) und 10 Gew.-% hydrophobierte Kieselsäure (CAB-O-SIL^{®} TS-530 von Cabot Corporation, USA) wurden in einem Mischgerät SpeedMixer™ DAC 600 von Hauschild Engineering, Deutschland, bei Raumtemperatur miteinander vermischt und eingerührt, bis eine makroskopisch homogene Paste erhalten wurde.

Die hergestellte Komponente ***A1*** wies eine Viskosität von 440 Pa.s auf.

### Untersuchung verschiedener Additive

Anhand der hergestellten Komponente ***A1*** wurde der Viskositätsanstieg unter Beimischung verschiedener Additive bestimmt. Dafür wurden zu jeweils 100 g Komponente ***A1*** unterschiedliche Mengen (0.1 bis 1.5 Gew.-%) an verschiedenen Additiven gegeben. Die Komponente ***A1*** und das Additiv wurden mit Hilfe eines Spatels vermengt und anschliessend in einem Mischgerät SpeedMixer™ DAC 600 während 20 Sekunden bei 2200 Umdrehungen pro Minute gemischt. Sofort nach dem Mischen wurde die Viskosität der erhaltenen Paste gemessen.

Die gemessenen Viskositäten bei unterschiedlichen Mengen an verschiedenen Additiven sind in Tabelle 1 dargestellt.

**Tabelle 1 Viskositäten der Komponente A1 nach Zugabe unterschiedlicher Mengen verschiedener Additive; ^{a)} erhältlich von Sigma-Aldrich, Schweiz; ^{b)} erhältlich von BASF SE, Deutschland.**

| | **Viskosität [Pa·s]** | | | | |
|---|---|---|---|---|---|
| Anteil Additiv zu ***A1*** [Gew.-%] | 0.1 | 0.3 | 0.5 | 1.0 | 1.5 |
| Polyethylenimine mit Ethylendiamin-End-gruppen (Mₙ 600) ^{a)} | | | 14680 | 8242 | 6801 |
| Jeffamine^{®} D-400 | 3081 | 14590 | 13500 | 7864 | 6828 |
| Jeffamine^{®} M-600 | 2081 | 13350 | 11450 | 9408 | 7539 |
| Jeffamine^{®} T-3000 | 2443 | 7427 | 10140 | 11220 | 9886 |
| Jeffamine^{®} SD-401 | 1934 | 10600 | 8898 | 6944 | 4134 |
| Jeffamine^{®} D-2000 | 2649 | 8402 | 8793 | 10090 | 9021 |
| Jeffamine^{®} SD-2001 | | | 6943 | 7215 | 7221 |
| Tetronic^{®} 701 ^{b)} | | | 3223 | 3893 | 4564 |
| Pluronic^{®} L-61 ^{b)} | | | 2762 | 3410 | 4246 |
| Tetronic^{®} 90R4 ^{b)} | | | 2511 | 3080 | 3747 |
| Polyethylenglykol (Mn 380-420) ^{a)} | | | 1811 | 1937 | 2128 |

### Herstellung der Komponente A2

50 Gew.-% α, ω-Dihydroxypolydimethylsiloxan mit einer Viskosität nach DIN 53018 von 50 Pa·s bei 23°C, 17 Gew.-% Methyl terminiertes Polydimethylsiloxan mit einer Viskosität nach DIN 53018 von 0.1 Pa.s bei 23°C und 33 Gew.-% gemahlene Kreide (Carbital™ 110) wurden in einem Dissolver bei Raumtemperatur unter Inertatmosphäre miteinander vermischt und eingerührt, bis eine makroskopisch homogene Paste erhalten wurde.

Zu jeweils 100 g der hergestellten Mischungen wurden unterschiedliche Mengen an verschiedenen Kieselsäuren gegeben, sodass ein Anteil der jeweiligen Kieselsäuren an der Komponente ***A2*** 1, 3, 5, 10 oder 15 Gew.-% resultierte. Die Kieselsäuren wurden mittels Mischgerät SpeedMixer™ DAC 600, während 20 Sekunden bei 2200 Umdrehungen pro Minute eingemischt, wobei das Mischen drei Mal wiederholt wurde.

Die gemessenen Viskositäten der hergestellten Komponenten ***A2*** sind in Tabelle 3 angegeben.

### Untersuchung verschiedener Kieselsäuren

Anhand der hergestellten Komponenten ***A2*** wurde der Viskositätsanstieg unter Verwendung verschiedener Kieselsäuren bestimmt.

Dafür wurden zu jeweils 100 g der unterschiedlichen Komponenten ***A2*** 0.5 Gew.-% des Additivs zugegeben. Die jeweiligen Komponenten ***A2*** und das Additiv wurden mit Hilfe eines Spatels vermengt und anschliessend in einem Mischgerät SpeedMixer™ DAC 600 während 20 Sekunden bei 2200 Umdrehungen pro Minute gemischt. Sofort nach dem Mischen wurde die Viskosität der erhaltenen Paste gemessen.

Die gemessenen Viskositäten bei unterschiedlichen Kieselsäuren und verschiedenen Additiven sind in Tabelle 3 dargestellt.

Folgende Kieselsäuren wurden untersucht:

**Tabelle 2 Untersuchte Kieselsäuren**

| ***Handelsname*** | ***Lieferant*** | ***Hydrophobierung*** |
|---|---|---|
| Aerosil^{®} R106 | Evonik Degussa GmbH, Deutschland | Octamethylcyclotetrasiloxan |
| Aerosil^{®} R202 | | Polydimethylsiloxan |
| Aerosil^{®} R972 | | Dimethyldichlorsilan |
| Aerosil^{®} 150 | | keine |
| CAB-O-SIL^{®} TS-530 | Cabot Corporation, USA | Hexamethyldisilazan |

**Tabelle 3 Viskositäten der Komponenten A2 mit verschiedenen Kieselsäuren ohne Additiv (Referenz) sowie nach Zugabe von jeweils 0.5 Gew.-% verschiedener Additive.**

| | **Viskosität [Pa·s]** | | | | |
|---|---|---|---|---|---|
| Anteil Kieselsäure in ***A2*** [Gew.-%] | 1 | 3 | 5 | 10 | 15 |
| | ohne Additiv (Referenz) | | | | |
| Aerosil^{®} R106 | 139 | 202 | 367 | 8220 | |
| Aerosil^{®} R202 | 179 | 258 | 438 | 4650 | |
| Aerosil^{®} R972 | 189 | 244 | 413 | 3016 | |
| CAB-O-SIL^{®} TS-530 | | | 167 | 341 | 1402 |
| Aerosil^{®} 150 | | 299 | 767 | | |

| | Additiv: 0.5 Gew.-% Jeffamine^{®} D-2000 | | | | |
|---|---|---|---|---|---|
| Aerosil^{®} R106 | 180 | 998 | 4344 | 21110 | |
| Aerosil^{®} R202 | 155 | 425 | 1253 | 13850 | |
| Aerosil^{®} R972 | 134 | 351 | 1250 | 15250 | |
| CAB-O-SIL^{®} TS-530 | | | 737 | 7360 | 17460 |
| Aerosil^{®} 150 | | 201 | 610 | | |

| | Additiv: 0.5 Gew.-% Jeffamine^{®} SD-2001 | | | | |
|---|---|---|---|---|---|
| Aerosil^{®} R106 | 210 | 793 | 3639 | 21110 | |
| Aerosil^{®} R202 | 168 | 348 | 1219 | 12290 | |
| Aerosil^{®} R972 | 163 | 343 | 1241 | 13940 | |
| CAB-O-SIL^{®} TS-530 | | | 558 | 4942 | 11270 |
| Aerosil^{®} 150 | | 218 | 497 | | |

## Patentansprüche

1. Zweikomponentige Siliconzusammensetzung bestehend aus einer Komponente **A** umfassend
- mindestens ein Polydiorganosiloxan **P** der Formel (I), 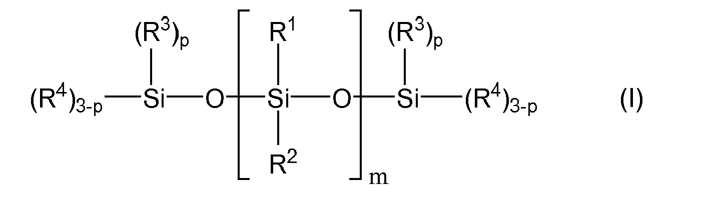 wobei
die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
die Reste R⁴ unabhängig voneinander für Hydroxylgruppen oder für Alkoxy-, Acetoxy- oder Ketoximgruppen mit jeweils 1 bis 13 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
der Index p für einen Wert von 0, 1 oder 2 steht; und
der Index m so gewählt ist, dass das Polydiorganosiloxan **P** bei einer Temperatur von 23 °C eine Viskosität von 10 bis 500'000 mPa·s aufweist;
und einer Komponente **B** umfassend entweder
- mindestens einen Vernetzer für Polydiorganosiloxane; sowie
- mindestens einen Katalysator für die Vernetzung von Polydiorganosiloxanen; falls p für einen Wert von 2 steht und die Reste R⁴ für Hydroxylgruppen stehen;
oder
- Wasser, falls die Reste R⁴ für Alkoxy-, Acetoxy- oder Ketoximgruppen stehen;
**dadurch gekennzeichnet, dass** eine der beiden Komponenten **A** oder **B** zusätzlich mindestens eine hydrophobe Kieselsäure enthält und die andere der beiden Komponenten zusätzlich mindestens ein Additiv, ausgewählt aus der Gruppe bestehend aus Polyamin, Polyether, Heteropolyether und Polyetheramin enthält.

2. Zweikomponentige Siliconzusammensetzung gemäss Anspruch 1,
**dadurch gekennzeichnet**, die mindestens eine hydrophobe Kieselsäure in der Komponente **A** und das Additiv in der Komponente **B** enthalten sind.

3. Zweikomponentige Siliconzusammensetzung gemäss einem der vorhergehenden Ansprüche, **dadurch gekennzeichnet, dass** der Anteil an hydrophober Kieselsäure 1 bis 15 Gew.-%, bezogen auf die gesamte zweikomponentige Siliconzusammensetzung, beträgt.

4. Zweikomponentige Siliconzusammensetzung gemäss einem der vorhergehenden Ansprüche, **dadurch gekennzeichnet, dass** das Additiv Polyamin oder Polyetheramin ist.

5. Zweikomponentige Siliconzusammensetzung gemäss Anspruch 4,
**dadurch gekennzeichnet, dass** das Additiv Polyethermonoamin, Polyetherdiamin oder Polyethertriamin ist.

6. Zweikomponentige Siliconzusammensetzung gemäss einem der vorhergehenden Ansprüche, **dadurch gekennzeichnet, dass** das Additiv mindestens eine primäre oder sekundäre Aminogruppe aufweist.

7. Zweikomponentige Siliconzusammensetzung gemäss einem der vorhergehenden Ansprüche, **dadurch gekennzeichnet, dass** der Anteil an Additiv 0.05 bis 5 Gew.-%, bezogen auf die gesamte zweikomponentige Siliconzusammensetzung, beträgt.

8. Zweikomponentige Siliconzusammensetzung gemäss einem der vorhergehenden Ansprüche, **dadurch gekennzeichnet, dass** die Komponente **A** und die Komponente **B** jeweils zusätzlich mindestens einen Füllstoff enthalten.

9. Zweikomponentige Siliconzusammensetzung gemäss einem der vorhergehenden Ansprüche, **dadurch gekennzeichnet, dass** die Komponente **A** eine Viskosität im Bereich von 500 bis 5000 Pa s und die Komponente **B** eine Viskosität im Bereich von 1 bis 1500 Pa s aufweist und wobei die Viskosität der zweikomponentigen Siliconzusammensetzung unmittelbar nach dem Mischen der beiden Komponenten **A** und **B** um ≥ 100% gegenüber der Ausgangsviskosität der höherviskosen Komponente ansteigt.

10. Zweikomponentige Siliconzusammensetzung gemäss einem der vorhergehenden Ansprüche, **dadurch gekennzeichnet, dass** das Gewichtsverhältnis von Komponente **A** zu Komponente **B** ≥ 1:1, insbesondere von 3:1 bis 15:1, bevorzugt von 10:1 bis 13:1, beträgt.

11. Verwendung einer zweikomponentigen Siliconzusammensetzung gemäss einem der Ansprüche 1 bis 10 als Klebstoff, Dichtstoff, Beschichtung oder als Gussmasse.

12. Gehärtete Siliconzusammensetzung, **dadurch gekennzeichnet, dass** sie erhältlich ist aus einer zweikomponentigen Siliconzusammensetzung gemäss einem der Ansprüche 1 bis 10 durch Mischen der Komponente **A** mit der Komponente **B.**

13. Verwendung einer hydrophoben Kieselsäure zusammen mit mindestens einem Additiv, ausgewählt aus der Gruppe bestehend aus Polyamin, Polyether, Heteropolyether und Polyetheramin, zur Erhöhung der Viskosität von zweikomponentigen Siliconzusammensetzungen, wobei die hydrophobe Kieselsäure und das Additiv je in einer der beiden separaten Komponenten der zweikomponentigen Siliconzusammensetzungen enthalten sind und beim Zusammenführen der beiden Komponenten zu einem Viskositätsanstieg von mindestens 100% gegenüber der Ausgangsviskosität der höherviskosen Komponente der zweikomponentigen Siliconzusammensetzung führen.

14. Verfahren zur Erhöhung der Viskosität bei der Applikation von zweikomponentigen Siliconzusammensetzungen bestehend aus einer Komponente **A** umfassend
- mindestens ein Polydiorganosiloxan **P,** der Formel (I), 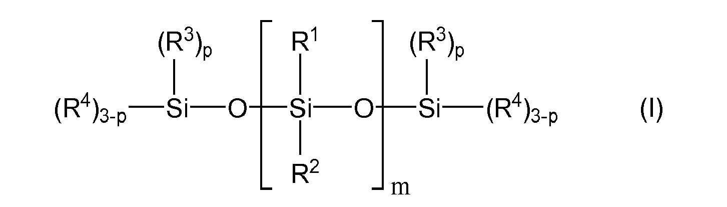 wobei
die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
die Reste R⁴ unabhängig voneinander für Hydroxylgruppen oder für Alkoxy-, Acetoxy- oder Ketoximgruppen mit jeweils 1 bis 13 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen;
der Index p für einen Wert von 0, 1 oder 2 steht; und
der Index m so gewählt ist, dass das Polydiorganosiloxan **P** bei einer Temperatur von 23 °C eine Viskosität von 10 bis 500'000 mPa·s aufweist;
und einer Komponente **B** umfassend entweder
- mindestens einen Vernetzer für Polydiorganosiloxane; sowie
- mindestens einen Katalysator für die Vernetzung von Polydiorganosiloxanen; falls p für einen Wert von 2 steht und die Reste R⁴ für Hydroxylgruppen stehen;
oder
- Wasser, falls die Reste R⁴ für Alkoxy-, Acetoxy- oder Ketoximgruppen stehen;
**dadurch gekennzeichnet, dass** einer der beiden Komponenten **A** oder **B** vor der Applikation mindestens eine hydrophobe Kieselsäure und der anderen der beiden Komponenten vor der Applikation mindestens ein Additiv, ausgewählt aus der Gruppe bestehend aus Polyamin, Polyether, Heteropolyether und Polyetheramin, zugegeben werden.
